(19) Europäisches Patentamt
European Patent Office
Office européen des brevets

(11) Veröffentlichungsnummer: **0 214 422**
**A2**

(12) **EUROPÄISCHE PATENTANMELDUNG**

(21) Anmeldenummer: **86110089.9**

(22) Anmeldetag: **23.07.86**

(51) Int. Cl.[4]: **D 06 M 15/564**
D 06 N 5/00

(30) Priorität: **10.08.85 DE 3528754**

(43) Veröffentlichungstag der Anmeldung:
**18.03.87 Patentblatt 87/12**

(84) Benannte Vertragsstaaten:
**BE DE GB NL SE**

(71) Anmelder: **BAYER AG**
**Konzernverwaltung RP Patentabteilung**
**D-5090 Leverkusen 1 Bayerwerk(DE)**

(72) Erfinder: **Von Bonin, Wulf, Dr.**
**Mendelssohnstrasse 30**
**D-5090 Leverkusen 1(DE)**

(72) Erfinder: **Ebneth, Harold, Dr.**
**Berta-von-Suttner-Strasse 61**
**D-5090 Leverkusen 1(DE)**

(54) **Verfahren zur Verminderung der Entflammbarkeit von saugfähigen Substraten und nach diesem Verfahren flammgeschützte Bedachungen und Verpackungsmittel.**

(57) Die Entflammbarkeit von saugfähigen Substraten, insbesondere aus cellulosischen Materialien wird durch Behandeln der Substrate mit einem gegebenenfalls Losungsmittel enthaltenden flussigen Gemisch aus (A) Polyisocyanaten und (B) Hydroxylgruppen aufweisenden phosphorhaltigen Kondensationsprodukten die durch Kondensation von gegebenenfalls OH-Gruppen enthaltenden primären oder sekundären aliphatischen, cycloaliphatischen, aromatischen, araliphatischen oder hererocylischen Mono- und/oder Polyaminen, Carbonylverbindungen und Dialkylphosphiten, gegebenenfalls unter anschließendem Oxalkylieren, erhältlich sind, vermindert.

EP 0 214 422 A2

Croydon Printing Company Ltd.

0214422

BAYER AKTIENGESELLSCHAFT 5090 Leverkusen, Bayerwerk
Konzernverwaltung RP
Patentabteilung GM/cm/c

# Verfahren zur Verminderung der Entflammbarkeit von saugfähigen Substraten und nach diesem Verfahren flammgeschützte Bedachungen und Verpackungsmittel

Die Erfindung betrifft ein Verfahren zur Verhinderung bzw. Erschwerung der Entflammung von saugfähigen Materialien (Substraten), insbesondere cellulosischen Substraten, das dadurch gekennzeichnet ist, daß die Substrate zuvor mit einem gegebenenfalls Lösungsmittel enthaltenden flüssigen Gemisch aus (A) Polyisocyanaten und (B) Hydroxylgruppen aufweisenden phosphorhaltigen Kondensationsprodukten, die durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren erhältlich sind, behandelt werden.

Als saugfähige, insbesondere cellulosische Substrate, die gegen Feuereinwirkung zu schützen sind, werden verstanden:

Mit offenen Poren oder Schlitzen oder Kapillaren versehene Substrate, in die eine Reaktionslösung, bzw. ein flüssiges Reaktionsgemisch eindringen kann. Hierbei ist auch die aufgerissene bzw. aufgerauhte Oberfläche eines an und für sich massiven oder geschlossenporigen Grundmaterials ein solches saugfähiges Substrat. Es kann sich also um Schaumstoffe, Gelege, Gewirke, Gewebe, Vliesse, gegebenenfalls auch mehr oder weniger poröse oder massive, oberflächlich aufgerauhte Substrate handeln. Die Grundmaterialien können Mineral-Charakter haben, wie etwa Gips- oder Mineralwollplatten, gemischt mineralisch-organischen Charakter wie Glaswoll/Baumwoll/-Mischvliesse, Dachpappen, Polymerputze oder rein organischen Charakter wie Pappen und Papiere oder Stroh- bzw. Reetdächer. Besonders bewährt hat sich das erfindungsgemäße Verfahren bei Substraten aus cellulosischen Grundmaterialien, z. B. Schindlen, Stroh- oder Reetdächer, Pappen, Papieren, Hölzern, Holzspanplatten, Verpackungsmittel, Jute.

Gegenstand der Erfindung ist ein Verfahren zur Verminderung der Entflammbarkeit von saugfähigen Substraten, insbesondere aus cellulosischen Materialien, durch Behandeln mit einem flüssigen Brandschutzmittel, dadurch gekennzeichnet, daß die Substrate mit einem gegebenenfalls Lösungsmittel enthaltenden flüssigen Gemisch aus (A) Polyisocyanaten und (B) Hydroxylgruppen aufweisenden phosphorhaltigen Kondensationsprodukten, die durch Kondensation von gegebenenfalls OH-Gruppen enhaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, erhältlich sind, behandelt werden.

Erfindungsgemäß bevorzugt ist, daß als Komponente (A) solche Polyisocyanate verwendet werden, wie sie durch Anilin-Formaldehyd-Kondensation und anschließende Phosgenierung erhalten werden, und als Komponente (B) Hydroxylgruppen aufweisende Kondensationsprodukte der Formel

$$(RO)_2PO-CH_2-N=(CHX-CHX-OH)_2$$

worin in der Formel

$R = C_1-C_8$-Alkyl oder $C_1-C_8$-Hydroxylalkyl und
X = H oder Methyl bedeuten.

Die Erfindung betrifft auch Bedachungen und Verpackungsmittel, flammgeschützt nach dem obengenannten Verfahren.

Als "behandeln" der Substrate mit den erfindungsgemäßen Gemischen wird verstanden: Imprägnieren, Beschichten, Verkleben, Tränken, Aufsprühen mit oder ohne Luftstrom und mit oder ohne Zusätze von Verdünnungsmitteln.

Da der Schutz von Reetdächern gegen Entflammung durch z.B. Funkenflug oder Brandstiftung naturgemäß beständig

gegen Regen und Witterung sein muß, können die konventionellen z. B. für Holz geeigneten, zumeist intumeszenten Brandschutzlackierungsmittel nicht eingesetzt werden, weil sie solchen Ansprüchen nicht genügen.

Die erfindungsgemäße Brandschutzausrüstung ist dagegen dünnflüssig applizierbar, härtet in kurzer Zeit aus und ist gegen Wasserzutritt ausgezeichnet beständig, sowie gegen Sonne, Wärme und Kälte. Sie hat intumeszierenden Charakter und kann frei von Halogen oder Phenolen hergestellt werden.

Ausgangskomponenten für die Herstellung der erfindungsgemäßen Brandschutzgemische sind als Polyisocyanate (Komponente (A)):

Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

$n =$ 2 - 4, vorzugsweise 2,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 10 C-Atomen, einen aromatischen Kohlenwasserstoffrest mit 6 - 15, vorzugsweise 6 - 13 C-Atomen oder einen araliphatischen Kohlenwasserstoffrest mit 8 - 15, vorzugsweise 8 - 13 C-Atomen

bedeuten, z. B. Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylen-diisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den GB-Patenschriften 874 430 und 848 671 beschrieben werden, m- und p-Isocyanatophenylsulfonylisocyanate gemäß der US-PS 3 454 606

perchlorierte Arylpolyisocyanate, wie sie z.B in der DE-AS 1 157 601 (US-PS 3 277 138) beschrieben werden, Carbodiimidgruppen aufweisende Polyisocyanate, wie sie in der DE-PS 1 092 007 (US-PS 3 152 162) sowie in den DE-OS 2 504 400, 2 537 685 und 2 552 350 beschrieben werden, Norbornan-Diisocyanate gemäß US-PS 3 492 330, Allophanatgruppen aufweisende Polyisocyanate, wie sie z.B. in der GB-PS 994 890, der BE-PS 761 626 und der NL-Patentanmeldung 7 102 524 beschrieben werden, Isocyanatgruppen aufweisende Polyisocyanate, wie sie z. B. in der US-PS 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-PS 752 261 oder in den US-Patentschriften 3 394 164 und 3 644 457 beschrieben werden, acylierte Harnstoffgruppen aufweisende Polyisocyanate gemäß der DE-PS 1 230 778, Biuretgruppen aufweisende Polyisocyanate, wie sie z.B. in den US-Patentschriften 3 124 605, 3 201 372 und 3 124 605 sowie in der GB-PS 889 050 beschrieben werden, durch Telomerisationsreaktionen hergestellte Polyisocyanate, wie sie z.B. in der US-PS 3 654 106 beschrieben werden, Estergruppen aufweisende Polyisocyanate, wie sie z.B. in den GB-Patentschriften 965 474 und 1 072 956, in der US-PS 3 567 763 und in der DE-PS 1 231 688 genannt werden, Umsetzungsprodukte der obengenannten Isocyanate mit Acetalen gemäß der DE-PS 1 072 385 und polymere Fettsäureester enthaltende Polyisocyanat gemäß der US-PS 3 455 883.

Es ist auch möglich, die bei der technischen Isocyanatherstellung anfallenden, Isocyanatgruppen aufweisenden

Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere aber Polyphenylpolymethylen-polyisocyanate, wie sie durch Anilin-Formaldehyd-Kondensation und anschließende Phosgenierung hergestellt werden ("rohes MDI), ferner Carbodiimidgruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-Diphenylmethandiisocyanat ableiten.

Als Komponente (B):
Mindestens zwei Hydroxylgruppen aufweisende phosphorhaltige Kondensationsprodukte, wie sie z.B. durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, erhalten werden können. Derartige Kondensationsprodukte sind an sich bekannt, z.B. aus der DE-PS 1 143 022, US-PS 3 076 010, DE-AS 1 803 747 und DE-AS 1 928 265.

Erfindungsgemäß bevorzugt sind als mindestens zwei Hydroxylgruppen aufweisende phosphorhaltige Kondensationsprodukte solche der Formel

$$(RO)_2RO\text{-}CH_2\text{-}N=(CHX\text{-}CHX\text{-}OH)_2,$$

in der

R = $C_1$-$C_8$-Alkyl oder $C_1$-$C_8$-Hydroxyalkyl, vorzugsweise Ethyl oder Hydroxyethyl, und

X = H oder Methyl, vorzugsweise H, bedeuten.

Zu Zwecken des Bindens von Wasser im Reaktionsgemisch sind wasserfreie Zeolithe als Zusatz geeignet, Einsatzmenge je nach Erfordernis. Geringe Wassergehalte des Reaktionsgemisches unter ca. 1 % stören jedoch im allgemeinen nicht.

Als gegebenenfalls mitzuverwendende Lösungsmittel kommen vorzugsweise nicht- bzw. schwer brennbare Lösungsmittel mit Flammpunkten über 100°C und hier solche mit guter Flüchtigkeit in Betracht wie z.B. die Halogen-Kohlenwasserstoffe wie z.B. Trifluorchlormethan, Difluordichlormethan, Brom-Fluormethan, Trichlorfluormethan, Tetrachlorkohlenstoff, Chloroform, Methylenchlorid, das wegen seiner guten Eigenschaften bevorzugt ist, aber auch Dichlorethan, 1,1,1-Trichlorethan und andere Trichlorethane, Perchlorethan. Es können aber in speziellen Fällen auch brennbare Lösungsmittel in Betracht gezogen werden, etwa Aceton, Butanon, Ethylacetat, t-Butanol, Toluol, Glykolester, Glykolether und Gemische.

Die Lösungsmittel können natürlich auch in Form von Gemischen Verwendung finden. Sie sind im zu applizierenden Komponentengemisch in Mengen von 90 - 0 % enthalten, vorzugsweise 70 - 30 %.

Außer Lösungsmitteln können dem erfindungsgemäß verwendeten Gemisch aus Polyisocyanaten (A) und P-haltigen Kondensationsproduktion (B) gegebenenfalls auch noch Farbgeber, Weichmacher, Witterungsstabilisatoren, Pigmente sowie Füllstoffe, Fasern, Phosphor, Stickstoff, Halogen enthaltende bekanntermaßen in Brandschutzformulierungen Anwendung findende Zusatzmittel z. B. Polyphosphate, Melamin und seine Abkömmlinge, halogenierte Aromaten, Polysaccharide, zugesetzt werden oder auch aus der Polyurethanchemie bekannte mit Isocyanaten reaktionsfähige Zusatzstoffe wie z.B. Amin- oder Hydroxylverbindungen.

Die Verwendung derartiger Zusatzstoffe ist zu Zwecken der Verbesserung oder Modifizierung des Brandverhaltens, der Bewitterungsstabilität oder der rheologischen, bzw. mechanischen Eigenschaften der im Rahmen des erfindungsgemäßen Verfahrens verwendeten Brandschutzausrüstung für z.B. Bedachungen in Betracht zu ziehen, jedoch nicht zwingend erforderlich.

Nach dem Vermischen der erfindungsgemäß einzusetzenden Komponenten bei -10 bis +80°C, vorzugsweise 5 - 35°C beginnt das Reaktionsgemisch gegebenenfalls während oder nach Verdunsten des Lösungsmittels und während oder nach Abschluß der Aufnahme des flüssigen Reaktionsgemisches durch das Substrat, unter Ausbildung eines quasi wasserunlöslichen feuerabweisenden festen Reaktionsproduktes

auszuhärten. Optimale Ergebnisse werden erhalten, wenn Polyisocyanat und Hydroxylgruppen-aufweisendes, phosphorhaltiges Kondensationsprodukt in stöchiometrischen Mengenverhältnissen angewendet werden, gegebenenfalls können jedoch auch ca. +/- 50 %ig, vorzugsweise +/- 0 - 25 %ig von diesem Mischungsverhältnis abweichende Polyisocyanatmengen Anwendung finden.

Im erfindungsgemäßen Anwendungsfalle werden die Reaktionskomponenten gegebenenfalls unter Mitverwendung von Lösungsmitteln von Hand oder maschinell gemischt und mit dieser Mischung das Substrat sofort anschließend behandelt, z.B. durch Tränken, Aufsprühen, Aufgießen. Besonders bewährt haben sich hier mobile Zwei-Komponenten-Mischmaschinen mit Sprühvorrichtung.

In speziellen Fällen kann das Substrat auch zunächst mit der einen und dann in einem zweiten Schritt mit der anderen Reaktionskomponente behandelt werden.

Es ist überraschend, daß eine gute Brandschutzwirkung der erfindungsgemäßen Reaktionsgemische in Verbindung mit gut brennbaren z.B. cellulosischen Substraten erzielt wird: während z.B. ein aus den stöchiometrisch gemischten Reaktionskomponenten hergestellter poröser ca. 2 mm dicker Film in einer Bunsenbrennerflamme leicht mitbrennt, so erlischt ein mit einer 50 %igen aufgetrockneten Lösung des gleichen Reaktionsgemisches getränktes Wellpappen- oder Filterpapiermaterial sofort nach Entfernen der Brennerflamme, obgleich sowohl Wellpappe, wie auch Filterpapier

unbehandelt besonders gut brennen, also eine zusätzliche Brandlast darstellen.

Im folgenden soll das erfindungsgemäße Verfahren beispielhaft erläutert werden. Die Beispiele dienen nicht der Einschränkung. Die angegebenen Teile und Prozente beziehen sich auf das Gewicht, sofern nichts anderes vermerkt wird.

Als Polyisocyanat wird in den Beispielen durch Phosgenierung von Anilin-Formaldehyd-Kondensaten hergestelltes technisches MDI verwendet, NCO-Gehalt ca. 30 %: Komponente A.

Als P-haltiges Kondensationsprodukt wird technisch hergestelltes Material der folgenden idealen Formel verwendet: Komponente B

$(C_2H_5O)=PO-CH_2-N=(C_2H_4OH)_2$ (Wassergehalt < 0,5 %)

Gleiche Mengenverhältnisse beider Komponenten sind einander annähernd stöchiometrisch äquivalent (+/- ca. 10 %).

Beispiel 1

Gleiche Teile Komponente A und B werden bei Raumtemperatur gemischt und auf eine Polyethylenplatte ausgegossen. Nach ca. 30 Minuten wird der gebiltete poröse harte Film abgenommen und als 3 x 10 cm großes Stück auf einer 0,2 mm Stahlblechplatte liegend mit einem Bunsenbrenner intensiv beflammt. In der Flamme brennt der Film heftig unter Ausbildung eines Intumeszenzschaumes. Nach Entfernen der Flamme brennt der Film noch einige Sekunden nach.

Beispiel 2

Aus dem in Beispiel 1 verwendeten Reaktionsgemisch wird eine 50 %ige Methylenchloridlösung hergestellt. Mit dieser Lösung wird ein handelsübliches Filterpapier getränkt, abgequetscht und getrocknet. Nach dem Trocknen hat sich das Flächengewicht des Substrates etwa verdoppelt.

Ein 3 x 10 cm großes Stück des so behandelten Filterpapieres wird auf ein 20 x 20 cm großes Stück des gleichartigen unbehandelten Filterpapieres gelegt und dieses auf ein grobmaschiges Drahtsieb.

Jetzt wird das Arrangement mit einer Bunsenbrennerflamme entzündet: Das unbehandelte Filterpapier brennt sofort weg, weitgehend auch unter der behandelten Probe. Das behandelte Material wird bei diesem Abbrand der Unterlage nicht entzündet. Auch beim Beflammen mit einem Bunsenbrenner läßt sich das behandelte Material nicht entzünden,

sondern bildet lediglich in der Flamme einen kräftigen Intumeszenzschaum aus.

Wird das behandelte Material bei Raumtemperatur 30 Tage unter Wasser gelagert, dann getrocknet und in einem analogen Versuch genommen, so wird wiederum das gleiche Ergebnis erhalten. Das Beispiel 2 zeigt, daß trotz Ansteigen des durch Substrat vorgegebenen brennbaren Anteils dieses durch das verfahrensgemäße Ausrüstungsverfahren wirkungsvoll und wasserfest gegen Entflammung geschützt wird.

Beispiel 3

Bei einer Umgebungstemperatur von ca. 10°C wird 1 $m^2$ Strohdachfläche mit ca. 1,6 kg einem maschinell mittels einer Hochdruck-Mischanlage, wie sie in der Polyurethanchemie üblich ist, hergestellten und sofort durch einen Sprühkopf mit Preßluft versprühten Gemisch aus 110 Teilen Komponente A und 100 Teilen Komponente B oberseitig besprüht. Das aufgesprühte Gemisch tränkt die Oberfläche, sickert in sie ein, bedeckt sie zum Teil und härtet in ca. 1 h aus.

Die Bedachungsfläche wird nach 10 h mit einer Neigung von 45° aufgestellt. Dann wird auf der behandelten Substratoberfläche ein Büschel aus 100 g Fichtenholzwolle aufgelegt und angezündet. Die Holzwolle brennt ab, ohne das Bedachungsmaterial zu entzünden. Eine gleichartige, unbehandelte Bedachungsfläche brennt bei diesem Versuch vollständig ab.

Beispiel 4

Mittels einer Sprühanlage wird ein Gemisch aus 112 Teilen Komponente A, 400 Teilen Methylenchlorid und 100 Teilen Komponente B in einer Menge von ca. 2 $l/m^2$ auf eine Schilf-Reetdachfläche aufgebracht. Nach 90 h bei 21°C wird 1 $m^2$ der Reetdachfläche dem in Beispiel 3 beschriebenen Entflammungstest ausgesetzt: Die Bedachung wird nicht entzündet, an der Zündstelle hat sich ein schützender Intumeszenzschaum gebildet.

Ein mit der gleichen Mischung bis zur Sättigung besprühter Wellpappkarton, dessen Flächengewicht nach dem Trocknen um 75 % angehoben ist, kann in diesem Test ebenfalls nicht entzündet werden.

Beispiel 5

1000 Teile gehäckseltes Weizenstroh werden auf einem Trommelmischer mit 400 Teilen eines Bindemittelgemisches aus gleichen Teilen der Komponenten A und B vermischt und dann sofort zu einer 2 cm dicken Platte verpreßt. Nach wenigen Minuten kann die Platte aus der mit 1,5 bar betriebenen, auf 80°C beheizten Presse entnommen werden. Sie hat ein Raumgewicht von ca. 700 $kg/m^3$.

Auf der waagerecht liegenden Plattenoberfläche werden 100 g Fichtenholzwolle in Form eines Knäuels abgebrannt: an der Einwirkungsstelle der Beflammung hat sich ein Intumeszenzschaum gebildet. Die Platte hat sich nicht entzündet.

0214422

Beispiel 6

Aus einer mit Sisalschnur gebundenen, 3 cm dicken Matte aus annähernd parallel liegenden Haferstrohhalmen wird ein 15 x 35 cm großes Stück geschnitten. Dieses wiegt 100 g. Es wird mit einer 20 %igen Methylenchloridlösung eines Gemisches aus gleichen Teilen Komponente A und B durch Aufsprühen getränkt, dazu werden etwa 450 g Lösung verwendet. Man läßt abtropfen und trocknet 24 h bei 35°C. Die Gewichtszunahme beträgt ca. 75 g. Ein gleichartiges Stück behandelter Strohmatte wird 30 Tage bei Raumtemperatur unter Wasser gelagert und dann bei 35°C getrocknet.

Mit einem gleichartigen, unbehandelten Stück Strohmatte sowie den beiden behandelten Stücken, von denen eines der Wasserlagerung unterworfen war, wird folgender Test gemacht:

Die Mattenstücke werden im Winkel von 30° als schiefe Ebene aufgestellt. Dann wird auf die Mitte der schiefen Ebenen je ein 0,2 g wiegender Baumwollwattebausch aufgedrückt, mit 2 ml Ethanol getränkt und angezündet.

Nach etwa 2 Minuten steht das unbehandelte Mattenstück voll in Flammen und brennt ab. Die beiden behandelten Mattenstücke verhalten sich gleich: um den brennenden Wattebausch herum erfolgt eine Verkohlung des Strohs, die lokal begrenzt bleibt, der Wattebausch brennt voll ab, ohne daß sich die Strohmatte entzündet.

## Patentansprüche

1. Verfahren zur Verminderung der Entflammbarkeit von saugfähigen Substraten, insbesondere aus cellulosischen Materialen, durch Behandeln mit einem flüssigen Brandschutzmittel, dadurch gekennzeichnet, daß die Substrate mit einem gegebenenfalls Lösungsmittel enthaltenden flüssigen Gemisch aus (A) Polyisocyanaten und (B) Hydroxylgruppen aufweisenden phosphorhaltigen Kondensationsprodukten, die durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, erhältlich sind, behandelt werden.

2. Verfahren nach Anspruch 1, dadurch gekennzeichnet, daß als Komponente (A) solche Polyisocyanate verwendet werden, wie sie durch Anilin-Formaldehyd-Kondensation und anschließende Phosgenierung erhalten werden, und als Komponente (B) Hydroxylgruppen aufweisende Kondensationsprodukte der Formel

$$(RO)_2PO-CH_2-N=(CHX-CHX-OH)_2$$

worin in der Formel

$R = C_1-C_8$-Alkyl oder $C_1-C_8$-Hydroxylalkyl und

$X$ = H oder Methyl bedeuten.

3. Bedachungen und Verpackungsmittel, flammgeschützt nach dem Verfahren gemäß Anspruch 1 und 2.